# EUROPÄISCHE PATENTSCHRIFT

(11) **EP 1 093 615 B1**
(45) Veröffentlichungstag und Bekanntmachung des Hinweises auf die Patenterteilung: **05.06.2002**
(21) Anmeldenummer: 99942768.5
(22) Anmeldetag: 01.07.1999
(51) Int. Cl.: G06F 13/16

(54) **VERFAHREN ZUR STEUERUNG DER ZUTEILUNG EINES SPEICHERZUGRIFFS**
METHOD FOR CONTROLLING THE ASSIGNMENT OF MEMORY ACCESS
PROCEDE DE COMMANDE DE L'ASSIGNATION D'UN ACCES A UNE MEMOIRE

(30) Priorität: 03.07.1998 DE 19829838
(43) Veröffentlichungstag der Anmeldung: 25.04.2001
(73) Patentinhaber: SIEMENS AKTIENGESELLSCHAFT, 80333 München (DE)
(72) Erfinder: MARIK, Wolfgang, A-1100 Wien (AT); EPPENSTEINER, Friedrich, A-1130 Wien (AT)
(86) Internationale Anmeldenummer: DE9901955
(87) Internationale Veröffentlichungsnummer: WO0002133

(56) Entgegenhaltungen:
- EP-A- 0 321 628
- US-A- 4 449 183
- US-A- 4 627 018
- US-A- 5 640 518

## Beschreibung

Die Erfindung betrifft ein Verfahren zur Steuerung der Zuteilung eines Speicherzugriffs, den mehrere aktive Einheiten einer Baugruppe, insbesondere mindestens ein Mikroprozessor und mindestens eine Ein-/Ausgabeeinheit anfordern gemäß dem Patentanspruch 1.

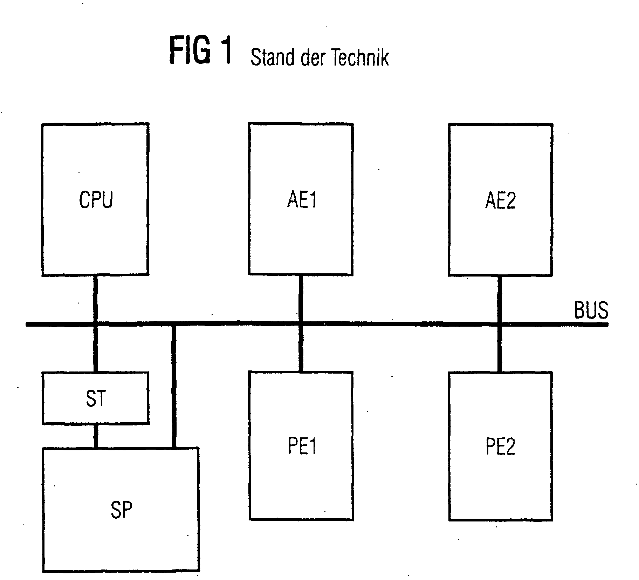

In heutigen Kommunikationssystemen werden zu Steuerungszwekken Controller-Baugruppen eingesetzt, deren Architektur gemäß der in Figur 1 dargestellten bekannten von Neumann-Architektur einen zentralen Bus aufweist, auf den die auf der Baugruppe vorhandenen Einheiten gemeinsam zugreifen.

In Figur 1 ist beispielhaft ein zentraler Bus BUS dargestellt, an den ein Mikroprozessor CPU, zwei von mehreren möglichen aktiven Ein-/Ausgabeeinheiten AE1, AE2 und zwei von mehreren möglichen passiven Ein-/Ausgabeeinheiten PE1, PE2 angeschlossen sind. Ferner ist eine Speichereinheit SP direkt und zugleich über eine vorgeschaltete Steuereinheit ST mit dem Bus verbunden. Eine solche aktive Ein-/Ausgabeeinheit, wie z.B. ein ATM-Protokoll-Baustein besitzt eine eigene Steuerung, die aktiv Steuersignale, Adressen und/oder Daten an den gemeinsamen Speicher sendet und/oder vom gemeinsamen Speicher empfängt. Hingegen wird der Austausch von Steuersignalen, Adressen und/oder Daten zwischen passiven Ein-/Ausgabeeinheiten und dem gemeinsamen Speicher über den. Mikroprozessor gesteuert. Eine solche passive Ein-/Ausgabeeinheit kann z.B. eine serielle V.24-Schnittstelle sein, die beispielsweise dem Anschluß eines Bedienterminals dient.

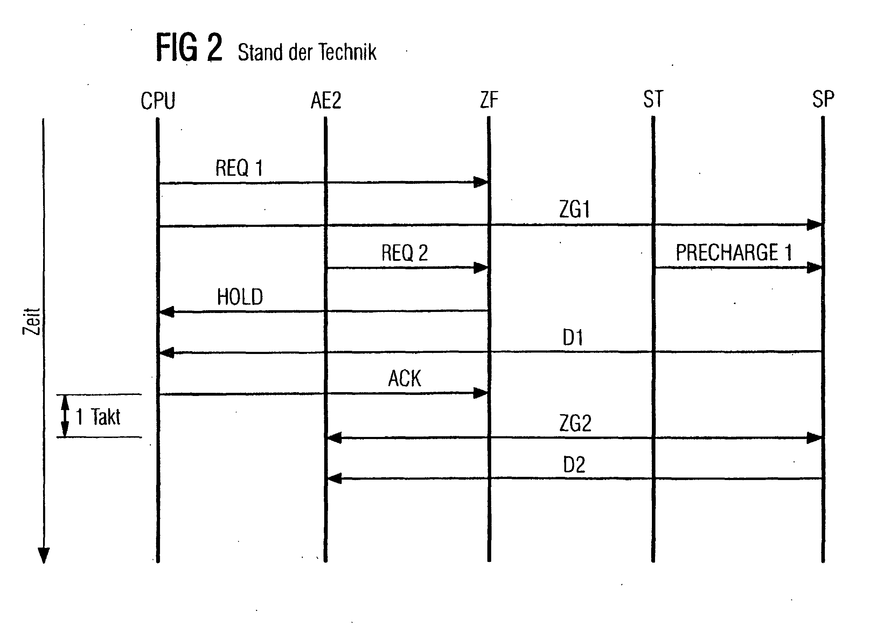

Um die Zuteilung eines Speicherzugriffs zwischen mehreren aktiven Einheiten einer Baugruppe, also z.B. einem Mikroprozessor CPU und einer Ein-/Ausgabeeinheit AE2, zu steuern wird bisher folgendes Verfahren angewandt, das in Figur 2 in einem Ablaufdiagramm dargestellt ist.

Figur 2 deutet mit Hilfe von Senkrechten die aktiven Einheiten CPU und AE2, die Steuereinheit ST, eine in der Steuereinheit integrierte Zuteilungsfunktion ZF und den gemeinsamen Speicher SP an. Der zeitliche Verlauf des Verfahrens ist von oben nach unten zu betrachten.

Beispielhaft fordert die aktive Einheit CPU mittels eines Request-Befehls REQ1 von der Zuteilungsfunktion den Speicherzugriff an. Die Zuteilungsfunktion teilt der aktiven Einheit CPU den Speicherzugriff ZG1 auf den Speicher zu. Nun kann die aktive Einheit CPU eine Befehlsfolge an den Speicher richten. Die aktive Einheit AE2 fordert jetzt mittels eines Request-Befehls REQ2 den Speicherzugriff von der Zuteilungsfunktion an. Zur nahezu gleichen Zeit setzt die Steuereinheit ST den letzten Befehl PRECHARGE1 der von der aktiven Einheit CPU in Richtung der Steuereinheit gesendeten Befehlsfolge an den Speicher ab. Damit die Zuteilungsfunktion den Speicherzugriff nun der aktiven Einheit AE2 zuteilen kann, setzt sie die aktive Einheit CPU mittels einem Holdsignal inaktiv bezüglich des Speicherzugriffs. Bevor die aktive Einheit CPU ein Bestätigungssignal ACK an die Zuteilungsfunktion senden kann, müssen die von der zuvor abgesetzten Befehlsfolge angeforderten Daten D1, die erst verzögert vom Speicher nach Eintreffen der Befehlsfolge gesendet werden können, bei der aktiven Einheit CPU eingetroffen sein. Nach Empfang des Bestätigungssignals ACK kann die Zuteilungsfunktion den Speicherzugriff ZG2 auf den Speicher SP der aktiven Einheit AE2 zuteilen. Die aktive Einheit AE2 setzt nun eine Befehlsfolge an den Speicher ab, worauf sie nach einer Verzögerungszeit die angeforderten Daten D2 erhält.

Dieses Verfahren ist insofern nachteilig, als daß bei einem Wechsel der Zuteilung des Speicherzugriffes ein Zeitverlust von mindestens einem Takt entsteht. Im Beispiel wird mindestens ein Takt nach dem Bestätigungssignal ACK bis zur Zuteilung des Speicherzugriffs ZG2 auf den Speicher an die aktive Einheit AE2 nicht genutzt. Auf der Controller-Baugruppe greifen der Mikroprozessor und die aktiven Ein-/Ausgabeeinheiten ständig auf den gemeinsamen Speicher zu, so daß der genannte Zeitverlust beim Wechsel der Zuteilung des Speicherzugriffs die Leistung der Controller-Baugruppe maßgeblich beeinflußt.

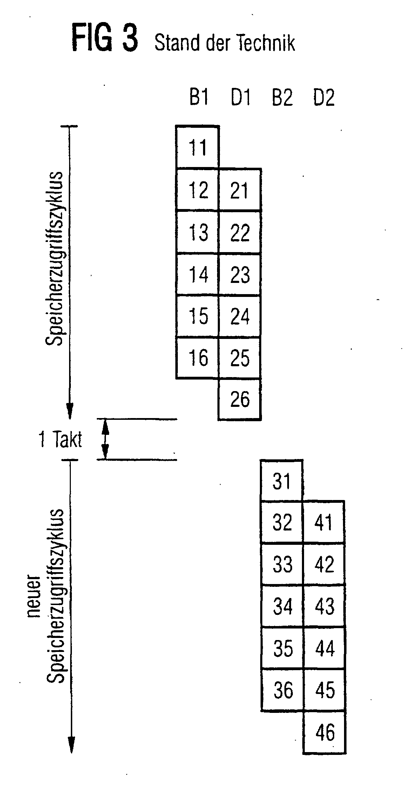

Ferner kann bei einem häufigen Wechsel der Zuteilung des Speicherzugriffs die grundsätzlich vorhandene pipelineartige Struktur des Speichers, d.h. daß aufeinanderfolgende Befehlszyklen zeitlich überlappend ausgeführt werden können, nicht ausgenutzt werden. Dieser Nachteil wird vor allem durch Figur 3 verdeutlicht.

In Figur 3 ist eine Pipelineverarbeitung der Steuereinheit ST angedeutet. Für den Fall, daß das aktuell der aktiven Einheit CPU der Speicherzugriff zugeteilt ist, setzt die aktive Einheit CPU innerhalb eines Speicherzugriffszyklus eine Befehlsfolge B1 an den Speicher ab. Pro Takt des Speicherzugriffszyklus wird ein Befehl der Befehlsfolge ausgeführt. Figur 3 zeigt eine solche Befehlsfolge beispielsweise mit 6 Befehlen 11 bis 16. Ein zu einem Befehl korrespondierendes Datum der mit 21 bis 26 gekennzeichneten Datenfolge D1 wird von der Steuereinheit mit mindestens einem Takt Verzögerung nach Ausführung des Befehls empfangen. Weiter ist dargestellt, daß eine Zuteilung des Speicherzugriffs an die aktive Einheit AE2 erst nach dem Bestätigungssignal ACK der aktiven Einheit CPU erfolgen kann. Dementsprechend kann die Befehlsfolge 31 bis 36 der aktiven Einheit AE2 erst einen Takt nach Zuteilung des Speicherzugriffs ausgeführt werden. Für die Datenfolge D2 mit den Daten 41 bis 46 gilt entsprechendes wie für die Datenfolge D1 mit den Daten 21 bis 26.

Wie in Figur 3 dargelegt, kann also die pipelineartige Struktur der Steuereinheit, die der schnellen Befehlsausführung dient, nicht ausgenutzt werden. Hinzu kommt, wie vorstehend erwähnt, daß bei jedem Wechsel der Zuteilung des Speicherzugriffs stets ein Zeitverlust entsteht, da der Speicherzugriffszyklus der ersten aktiven Einheit z.B. CPU abgeschlossen werden muß, dann der zweiten aktiven Einheit z.B. AE2 die Zuteilung des Speicherzugriffs gegeben werden muß und dann erst die zweite aktive Einheit den Speicherzugriffszyklus starten kann.

Aufgrund der genannten Nachteile ist die Leistungsfähigkeit einer solchen Controller-Baugruppe maßgeblich beeinträchtigt.

Eine ähnliche Architektur wird in der Figur 1 der europäischen Patentanmeldung EP 0 321 628 A1 gezeigt. Bei dieser Architektur weisen die "memory user devices" 1 und 2 gemeinsame zur "memory controller"-Einheit führenden Steuer-, Adressund Datenbusleitungen auf. Um eine Pipelineverarbeitung der an den Speicher gerichteten Befehle zu ermöglichen, sind zusätzlich spezielle separate Steuer-, Adress- und Datenleitungen zwischen dem jeweiligen "user device" und der "memory controller"-Einheit vorhanden. Ein Nachteil in dieser Architektur ist darin zu sehen, daß bei der Abarbeitung der an den Speicher gerichteten Befehlsfolge ein blockierungsfreier Adress- bzw. Datenstrom auf den gemeinsamen Steuer-, Adressbzw. Datenbusleitungen berücksichtigt bleiben muß, so daß einer Optimierung in der Verarbeitung der Befehlsfolge Grenzen gesetzt sind.

Daher besteht die Aufgabe der Erfindung darin, ein Verfahren zur Steuerung der Zuteilung eines Speicherzugriffs dahingehend zu entwickeln, daß eine weitere Leistungssteigerung einer im obengenannten Zusammenhang angegebenen Baugruppe zu erzielen.

Diese Aufgabe wird durch die im Anspruch 1 angegebenen Merkmale gelöst.

Das der Erfindung zugrundeliegende Prinzip besteht darin, den Zeitpunkt, in dem eine in eine zentrale Steuereinheit integrierte Zuteilungsfunktion einen solchen Speicherzugriff einer aktiven Einheit, der der Speicherzugriff aktuell zugeteilt ist, entzieht und einer anderen den Speicherzugriff anfordernden aktiven Einheit zuteilt, zumindest soweit vorzuverlegen, daß von der mit dem Speicher verbundenen Steuereinheit der letzte Befehl des aktuellen Speicherzugriffszyklus an den Speicher bereits abgesetzt worden ist und jede aktive Einheit eine Nachricht bezüglich des an dem Speicher gerichteten letzten Befehls des aktuellen Speicherzugriffszyklus erhalten hat. Das erfindungsgemäße Verfahren setzt jedoch eine Anordnung der Einheiten auf einer Baugruppe in der Weise voraus, daß mindestens eine zentrale Steuereinheit die Kommunikation und den Datenaustausch zwischen solchen über jeweils eine Busschnittstelle mit einer Steuerheit verbundenen aktiven Einheiten und einem mit einer Steuereinheit verbundenen Speicher steuert. Solche aktiven Einheiten sind insbesondere mindestens ein Mikroprozessor und mindestens eine Ein-/Ausgabeeinheit.

Aufgrund des Umstandes, daß bereits spätestens zum Zeitpunkt des letzten an den Speicher gerichteten Befehls der Wechsel der Zuteilung des Speicherzugriffs eingeleitet wird, wird erreicht, daß der Speicherzugriff fließend ohne Zeitverluste von einer aktiven Einheit auf eine andere aktive Einheit übergeht.

Weitere Ausgestaltungen der Erfindung sind in Unteransprüchen gekennzeichnet.

Gemäß einer vorteilhaften Weiterbildung der Erfindung sendet die aktive Einheit, der der aktuell zugeteilte Speicherzugriff entzogen werden darf, eine entsprechende Nachricht an eine Steuereinheit zu dem Zeitpunkt, nachdem eine Nachricht bezüglich des an den Speicher gerichteten letzten Befehls des aktuellen Speicherzugriffszyklus bei ihr eingetroffen ist.

Dadurch wird erreicht, daß nicht die Steuereinheit alleine über die Zuteilung des Speicherzugriffs entscheidet, sondern zusätzliche Informationen von den aktiven Einheiten in die Entscheidung der Steuereinheit einfließen können.

Gemäß einer weiteren Ausgestaltung der Erfindung werden in einer Steuereinheit alle Anforderungen der aktiven Einheiten auf Zuteilung des Speicherzugriffs gespeichert und die anschließende Zuteilung eines Speicherzugriffs erhalten die anfordernden aktiven Einheiten nacheinander.

Die Zuteilung des Speicherzugriffs an die anfordernden aktiven Einheiten können gemäß einer Weiterbildung der Erfindung auch nach Priorität der Anforderung durchgeführt werden.

Durch die Speicherung aller Anforderungen der aktiven Einheiten und die Reihenfolge der Zuteilung des Speicherzugriffs wird die Steuereinheit in der Pipelineverarbeitung von Speicherzugriffen, d.h. aufeinanderfolgende Speicherzugriffszyklen werden zeitlich überlappend ausgeführt, unterstützt.

Eine nächste Weiterbildung der Erfindung sieht vor, einen Speicherzugriffszyklus dadurch zu beenden, daß eine aktive Einheit, der zu Beginn des Speicherzugriffszyklus dem Speicherzugriff zugeteilt worden ist, eine individuelle Nachricht zum Empfang von Daten aus dem Speicher erhält. Dadurch wird der Umstand begünstigt, daß dann, wenn die Steuereinheit den letzten Befehl an den Speicher gerichtet hat, die Zuteilungsfunktion den Speicherzugriff einer anderen aktiven Einheit bereits zuteilen kann, bevor der aktiven Einheit, der zuletzt der Speicherzugriff zugeteilt war, die angeforderten Daten zur Verfügung stehen. Deshalb erhält die aktive Einheit zu dem Zeitpunkt, in dem die Daten verfügbar sind, eine individuelle Nachricht zum Empfang der Daten aus dem Speicher. Mit anderen Worten: Eine solche Nachricht wird individuell an die die Daten anfordernde aktive Einheit gerichtet. Somit gelangen die Daten an die aktive Einheit, die die Daten zuvor angefordert hat, obwohl der aktiven Einheit der Speicherzugriff eventuell bereits entzogen worden ist.

Nachstehend wird ein Ausführungsbeispiel der Erfindung unter Bezugnahme auf eine Zeichnung näher beschrieben.

In der Zeichnung zeigen:
Figur 1, Figur 2 und Figur 3 den eingangs genannten Stand der Technik,
Figur 4 die Architektur der auf einer Baugruppe angeordneten Einheiten,
Figur 5 ein Ablaufdiagramm zur Zuteilung des Speicherzugriffs und
Figur 6 die Pipelineverarbeitung einer Steuereinheit.

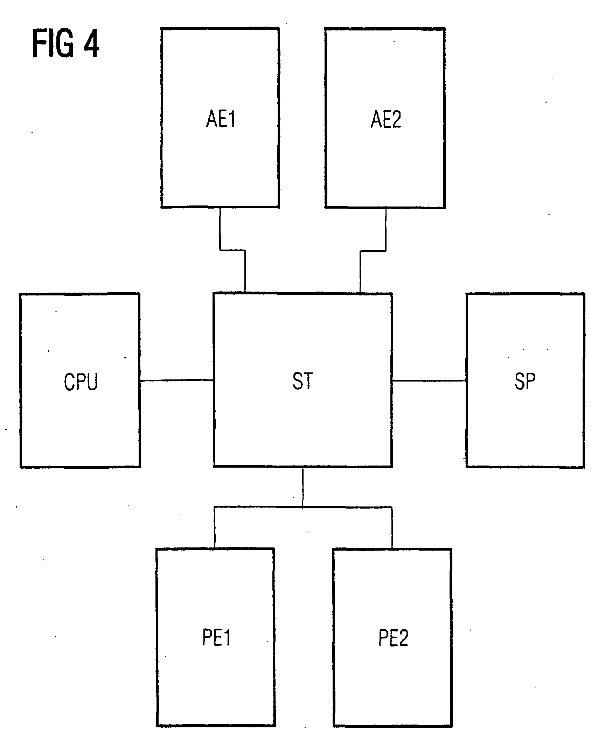

Figur 4 zeigt die Architektur einer solchen Baugruppe, auf der beispielhaft eine zentrale Steuereinheit ST angeordnet ist. An die zentrale Steuereinheit sind über separate Busse ein Mikroprozessor CPU, ein Speicher SP, aktive Ein-/Ausgabeeinheiten z.B. AE1 und AE2 sowie passive Ein-/Ausgabeeinheiten z.B. PE1 und PE2 angeschlossen. Die Funktionalitäten der Einheiten CPU, SP, AE1, AE2, PE1, PE2 entsprechen den Funktionalitäten der eingangs erwähnten Einheiten der Figur 1.

Alternativ ist vorstellbar, daß auf einer solchen Baugruppe die Einheiten CPU, SP, AE1, AE2, PE1, PE2 an je eine eigene Steuereinheit angeschlossen sind. Diese den Einheiten zugeordneten Steuereinheiten sind untereinander verbunden. Diese Steuereinheiten verständigen sich untereinander darüber, welcher aktiven Einheit der Speicherzugriff zugeteilt worden ist. Die Funktionalität der Zuteilungsfunktion wird dabei auf die jeweiligen Steuereinheiten aufgeteilt. Die Koordination erfolgt dann durch den Austausch von Steuernachrichten.

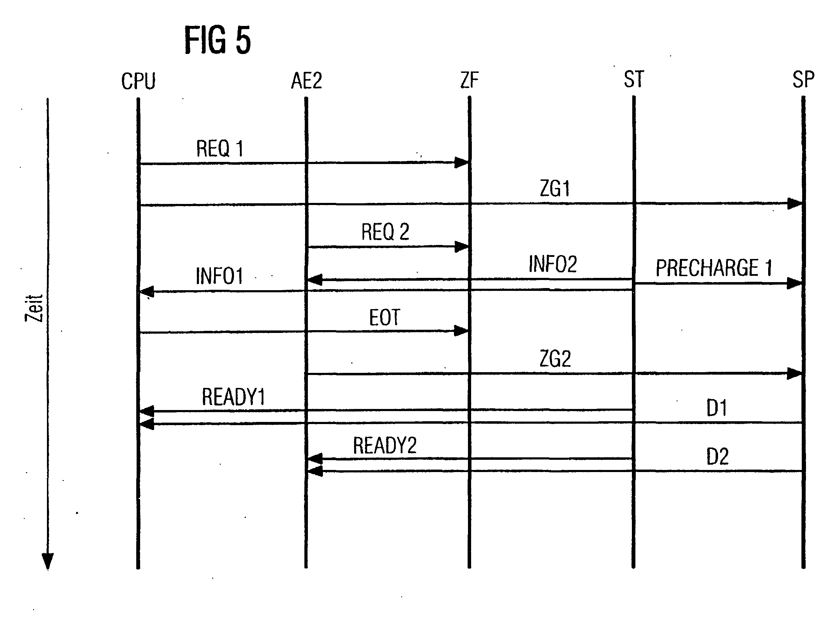

Die Darstellungsweise des Ablaufdiagramms von Figur 5 entspricht im wesentlichen der der Figur 2. Eine aktive Einheit CPU fordert mit einem Request-Befehl REQ1 eine Zuteilung des Speicherzugriffs von der Zuteilungsfunktion ZF an. Darauf teilt die Zuteilungsfunktion den Speicherzugriff ZG1 der aktiven Einheit CPU zu. Nun fordert eine aktive Einheit z.B. AE2 ebenfalls die Zuteilung des Speicherzugriffs mittels eines Request-Befehls REQ2 von der Zuteilungsfunktion an. Zu dem Zeitpunkt, in dem die Steuereinheit ST den letzten Befehl PRECHARGE1 an den Speicher absetzt, sendet sie an die aktiven Einheiten CPU und AE2 eine entsprechende Nachricht INFO1 bzw. INFO2. Für den Fall, daß die aktive Einheit CPU unterbrochen werden darf, leitet diese die erhaltene Nachricht, verknüpft mit weiteren Informationen, als End-of-Transfer-Nachricht EOT an die Zuteilungsfunktion weiter. Anschließend erhält die aktive Einheit AE2 verzögerungsfrei den Speicherzugriff ZG2 auf den Speicher SP, obwohl die aktive Einheit AE1 die zu dem Speicherzugriff ZG1 korrespondierenden Daten D1 noch nicht erhalten hat. Zu dem Zeitpunkt, zu dem die Daten D1 zur Verfügung stehen, sendet die Steuereinheit ein Ready-Signal READY1 über eine in der Figur nicht dargestellten individuellen Steuerleitung an die aktive Einheit CPU. Der Speicher sendet die Daten D1 zeitgleich an die aktive Einheit CPU. Falls danach die Daten D2 zur Verfügung stehen, sendet die Steuereinheit ein Ready-Signal READY2 über eine nicht dargestellte individuelle Steuerleitung an die aktive Einheit AE2. Der Speicher übermittelt dann die Daten D2 zeitgleich an die aktive Einheit AE2. Auf diese Weise wird sichergestellt, daß die Daten D1 und D2 an den richtigen Adressaten gelangen.

Die von den aktiven Einheiten CPU und AE2 an die Züteilungsfunktion gesendeten Request-Befehle REQ1, REQ2 werden in der Steuereinheit gespeichert und veranlassen nacheinander die Zuteilungsfunktion, die Zuteilung des Speicherzugriffs an die aktiven Einheiten CPU und AE2 entsprechend nach der Priorität der Requestbefehle REQ1, REQ2 durchzuführen.

Vor einem Schreibzugriff auf den Speicher werden die zuverarbeitende Daten zunächst aus dem Speicher in der oben beschriebenen Weise gelesen. Danach werden die Daten von einer aktiven Einheit z.B. CPU verarbeitet, und schließlich in den Speicher zurückgeschrieben. Die Daten stehen damit zu Beginn eines schreibenden Speicherzugriffszyklus zur Verfügung.

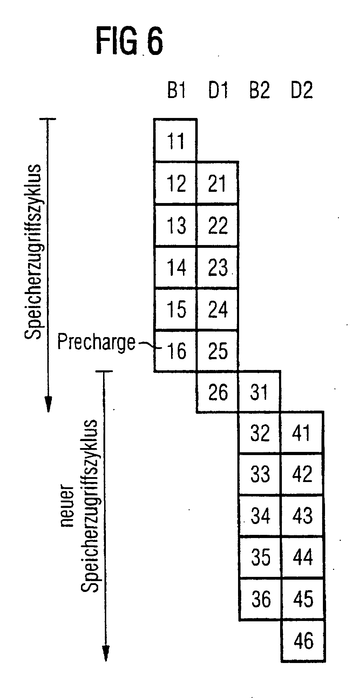

Die in Figur 6 gewählte Art der Darstellung entspricht weitgehend der der Figur 3. Auch hier ist die Pipelineverarbeitung der Steuereinheit ST skizziert. Im Unterschied zur Figur 3 beginnt in Figur 6 der Speicherzugriffszyklus der aktiven Einheit AE2 sofort im darauffolgenden Takt nach Absetzen des letzten Befehls 16 (PRECHARGE1). Dies ist dadurch angedeutet, daß das letzte Datum 26 der Datenfolge D1 zur aktiven Einheit CPU im gleichen Takt gesendet wird, in dem der erste Befehl 31 von der Steuereinheit ausgeführt wird. Somit können die Befehlsfolgen B1 und B2 fließend ohne Zeitverlust aneinandergereiht ausgeführt werden.

## Patentansprüche

1. Verfahren zur Steuerung der Zuteilung eines Speicherzugriffs, den mehrere aktive Einheiten einer Baugruppe, insbesondere mindestens ein Mikroprozessor (CPU) und mindestens eine Ein-/Ausgabeeinheit (AE1, AE2), anfordern, wobei mittels einer Zuteilungsfunktion (ZF) innerhalb mindestens einer Steuereinheit (ST), die die Kommunikation und den Datenaustausch zwischen solchen über jeweils eine Busschnittstelle mit einer solchen Steuereinheit verbundenen aktiven Einheiten und einem über eine Busschnittstelle mit mindestens einer Steuereinheit verbundenen Speicher (SP) steuert, ein solcher Speicherzugriff (ZG1, ZG2) einer aktiven Einheit, der der Speicherzugriff aktuell zugeteilt ist, entzogen und einer anderen den Speicherzugriff anfordernden aktiven Einheit spätestens zu dem Zeitpunkt zugeteilt wird, in dem von einer mit dem Speicher verbundenen Steuereinheit der letzte Befehl (PRECHARGE1) des aktuellen Speicherzugriffszyklus an den Speicher gerichtet wird und in dem von der Steuereinheit jede aktive Einheit eine Nachricht (INFO1, INFO2) bezüglich des an den Speicher gerichteten letzten Befehls des aktuellen Speicherzugriffszyklus erhält.

2. Verfahren nach Anspruch 1,
**dadurch gekennzeichnet, daß** die aktive Einheit, der der aktuell zugeteilte Speicherzugriff entzogen werden darf, eine entsprechende Nachricht (EOT) an eine Steuerheit zu einem Zeitpunkt sendet, nachdem eine Nachricht bezüglich des an den Speicher gerichteten letzten Befehls des aktuellen Speicherzugriffszyklus bei ihr eingetroffen ist.

3. Verfahren nach einem der vorhergehenden Ansprüche,
**dadurch gekennzeichnet, daß** in einer Steuereinheit alle Anforderungen (REQ1, REQ2) der aktiven Einheiten auf Zuteilung eines Speicherzugriffs gespeichert werden und die anfordernden aktiven Einheiten eine Zuteilung des Speicherzugriffs nacheinander erhalten.

4. Verfahren nach Anspruch 3,
**dadurch gekennzeichnet, daß** die Zuteilung des Speicherzugriffs an die anfordernden aktiven Einheiten nach Priorität der Anforderung durchgeführt wird.

5. Verfahren nach einem der vorhergehenden Ansprüche,
**dadurch gekennzeichnet, daß** ein Speicherzugriffszyklus dadurch beendet wird, daß die aktive Einheit, der zu Beginn des Speicherzugriffszyklus der Speicherzugriff zugeteilt worden ist, eine individuelle Nachricht (READY1, READY2) zum Empfang von Daten aus dem Speicher erhält.

## Claims

1. Method for controlling the allocation of memory access requested by a plurality of active units of a module, in particular by at least one microprocessor (CPU) and at least one input/output unit (AE1, AE2), where an allocation function (ZF) within at least one control unit (ST) controlling the communication and the data interchange between such active units, connected to such a control unit via a respective bus interface, and a memory (SP), connected to at least one control unit via a bus interface, is used to take such memory access (ZG1, ZG2) from an active unit to which the memory access is currently allocated and to allocate it to a different active unit requesting memory access at the latest at the instant at which a control unit connected to the memory sends the last instruction (PRECHARGE1) of the current memory access cycle to the memory and at which each active unit receives a message (INFO1, INFO2) from the control unit regarding the last instruction sent to the memory in the current memory access cycle.

2. Method according to Claim 1,
**characterized in that** the active unit from which the currently allocated memory access can be taken transmits an appropriate message (EOT) to a control unit at an instant after it has received a message regarding the last instruction sent to the memory in the current memory access cycle.

3. Method according to one of the preceding claims,
**characterized in that** a control unit stores all requests (REQ1, REQ2) from the active units for allocation of memory access, and the requesting active units receive allocation of the memory access in succession.

4. Method according to Claim 3,
**characterized in that** the memory access is allocated to the requesting active units according to priority of the request.

5. Method according to one of the preceding claims,
**characterized in that** a memory access cycle is ended by virtue of the active unit to which the memory access has been allocated at the start of the memory access cycle receiving an individual message (READY1, READY2) for receiving data from the memory.

## Revendications

1. Procédé destiné au contrôle de l'assignation d'un accès à une mémoire, qui est sollicité par plusieurs unités actives d'un module, notamment au moins un microprocesseur (CPU) et au moins une unité d'entrée et de sortie (AE1, AE2), au cours duquel, au moyen d'une fonction d'assignation (ZF) à l'intérieur d'au moins une unité de commande (ST), qui contrôle la communication et l'échange de données entre de telles unités actives reliées, chacune par l'intermédiaire d'une interface de bus, à une telle unité de commande et une mémoire (SP) reliée, par l'intermédiaire d'une interface de bus, à au moins une unité de commande, un tel accès (ZG1, ZG2) à la mémoire est retiré à une unité active, à laquelle l'accès à la mémoire est actuellement assigné, et est affecté à une autre unité active, qui sollicite l'accès à la mémoire, au plus tard à l'instant auquel une unité de commande reliée à la mémoire envoie, à la mémoire, la dernière instruction (PRECHARGE1) du cycle actuel d'accès à la mémoire et au cours duquel chaque unité active reçoit, de l'unité de commande, un message (INFO1, INFO2) relatif à la dernière instruction du cycle actuel d'accès à la mémoire, adressée à la mémoire.

2. Procédé selon la revendication 1
**caractérisé par le fait que** l'unité active, à laquelle il est possible de retirer l'accès à la mémoire actuellement assigné, envoie un message (EOT) correspondant à une unité de commande à un instant ultérieur à celui auquel lui parvient un message relatif à la dernière instruction du cycle actuel d'accès à la mémoire, qui a été adressée à la mémoire.

3. Procédé selon l'une des revendications précédentes
**caractérisé par le fait que**, dans une unité de commande, toutes les sollicitations (REQ1, REQ2) des unités actives pour une affectation de l'accès à la mémoire sont mémorisées et que les unités actives, qui en ont fait une demande, reçoivent l'une après l'autre une assignation de l'accès à la mémoire.

4. Procédé selon la revendication 3
**caractérisé par le fait que** l'assignation de l'accès à la mémoire aux unités actives, qui en ont fait la demande, est exécutée en fonction de la priorité de la demande.

5. Procédé selon l'une des revendications précédentes
**caractérisé par le fait qu'**un cycle d'accès à la mémoire est terminé **par le fait que** l'unité active, à laquelle l'accès à la mémoire a été assigné au début du cycle d'accès à la mémoire, reçoit un message individuel (READY1, READY2) pour la réception de données provenant de la mémoire.
